# EUROPEAN PATENT SPECIFICATION

(11) **EP 1 871 134 B1**
(45) Date of publication and mention of the grant of the patent: **16.12.2009**
(21) Application number: 06775581.9
(22) Date of filing: 01.09.2006
(51) Int. Cl.: H04W 36/14

(54) **METHOD FOR HANDOVER BETWEEN SYSTEMS**
HANDOVER-VERFAHREN ZWISCHEN SYSTEMEN
PROCEDE DE TRANSFERT ENTRE DES SYSTEMES

(30) Priority: 01.09.2005 CN 200510093678
(43) Date of publication of application: 26.12.2007
(73) Proprietor: Huawei Technologies Co., Ltd., Longgang District Shenzhen 518129 (CN)
(72) Inventor: LI, Shijun, Guangdong 518129 (CN)
(74) Representative: Körber, Martin Hans
(86) International application number: PCT/CN2006/002264
(87) International publication number: WO 2007/025487

(56) References cited:
- EP-A- 1 018 849
- US-A1- 2003 076 815
- US-A1- 2005 055 570
- US-A1- 2005 114 490
- SIEMENS: "TSG RAN AH 000056: UMTS Security parameters in BSSMAP messages" 3GPP TSG RAN RRM AD HOC, [Online] 9 February 2000 (2000-02-09), - 11 February 2000 (2000-02-11) pages 1-10, XP002495372 Turin, Italy Retrieved from the Internet: URL:www.3gpp.org> [retrieved on 2008-09-11]
- PUETZ S ET AL: "SECURE INTEROPERATION BETWEEN 2G AND 3G MOBILE RADIO NETWORKS" INTERNATIONAL CONFERENCE ON 3G MOBILE COMMUNICATION TECHNOLOGIES, XX, XX, 27 March 2000 (2000-03-27), pages 28-32, XP001016360

## Description

### Field of the Invention

The present invention relates generally to the call handover technology of wireless communications, and more particularly, to a method for handover of a user terminal between a 3rd Generation (3G) communication system and a 2nd Generation (2G) communication system.

### Background of the Invention

In the current communication network system, different communication networks coexist, and more particularly, 2G communication network and 3G communication network coexist. Because of the mobility of a user terminal, a user initiating a call may traverse two communication networks during one call. To guarantee that no conversation interruption occurs when the user traverses different communication systems, the handover between two communication systems is needed.

In a 3G communication system such as Wideband Code Division Multiple Address (WCDMA) system, to guarantee the security of conversation contents and identity information of the user, the function for the network to authenticate a user, the function for a user to authenticate the network and the function of integrity protection are provided. In addition, in the 3G communication system, the length of a key is further increased, and a securer encryption algorithm and a securer integrity algorithm are adopted. Therefore, in such a communication system, the security of communications may be effectively guaranteed. With respect to the handover between the 3G system and the 2G system, there is a method for change of a key between the 3G communication system such as a Universal Mobile Telecommunications System (UMTS) and the 2G communication system such as a Global System for Mobile communications (GSM) to guarantee that the user terminal still communicates in an encryption mode after the handover between systems.

When a Mobile Station (MS), as the user terminal, handovers in the encryption mode from a first communication system to a second communication system, for example, from the 3G communication system to the 2G communication system, the MS transfers encryption information between systems through a handover request message. The encryption information includes a key, a supported/admitted GSM encryption algorithm, etc. Upon receiving the handover request message, the Base Station Subsystem (BSS) of the GSM selects a supported GSM encryption mode, and the 3G Radio Network Controller (RNC) sends the supported GSM encryption mode to the MS through a handover command message. After the handover from the 3G communication system to the 2G communication system succeeds, the 3G RNC no longer saves the UMTS Terrestrial Radio Access Network (UTRAN) capability information of the MS because the MS is not in the management area of the 3G RNC, i.e. the RNC in the first communication system. When the MS will handover from the 2G communication system back to the 3G communication system, the encryption information supported by the MS can not be obtained because the 3G RNC does not store the UTRAN capability information of the MS, as a result, the handover fails. In a word, the MS can not handover between the 3G communication system and the 2G communication system repeatedly
Document D1, TSG RAN AH 000056 Siemens AG: UMTS Security parameters in BSSMAP messages, provide a method to support intersystem handover between GSM and UMTS, section2.4 introduce additional security parameters used to support inter-handover towards UMTS, the additional security parameters includes the parameters of "UE security capabilities", the additional security parameters could be delivered to the RNC at connection establishment, the RNC should provide the additional security parameters containing the UE security capabilities of the 3G to the BSC during the handover from UMTS to GSM , the BSS store the additional security parameters, and transfer the parameters within BSSMAP HANDOVER REQUEST message during the handover back.

### Summary of the Invention

In view of the above, the present invention provides a method for handover between systems to guarantee that a user terminal handovers successfully between a first communication system and a second communication system repeatedly.

The method for handover between systems is described below.

A method for handover between systems includes:
in response to a user terminal handovers from a first communication system to a second communication system, obtaining and saving, by a communication control device of the second communication system, encryption information of the user terminal;
when the user terminal is to handover from the second communication system back to the first communication system, sending, by the communication control device of the second communication system, the encryption information of the user terminal to a first access network device of the first communication system;
where the user terminal handovers back to the first communication system through interaction between the first communication system and the second communication system;
wherein the obtaining encryption information of the user terminal comprising:
sending, by the communication control device of the second communication system, a request to the user terminal for the access capability information of the user terminal (202, 301) ;
obtaining, by the communication control device of the second communication system, the access capability information containing the encryption information from the user terminal.

Preferably, the sending the encryption information of the user terminal to the first access network device of the first communication system includes:
sending the access capability information containing the encryption information of the user terminal to the first access network device of the first communication system, wherein the first access network device obtains the encryption information of the user terminal from the access capability information.

Preferably, the obtaining and saving the access capability information includes:
sending, by the communication control device of the second communication system, a classmark request message to the user terminal to notify the user terminal to report the access capability information; receiving, by the communication control device of the second communication system, the access capability information containing the encryption information sent by the user terminal; and saving, by the communication control device of the second communication system, the access capability information containing the encryption information of the user terminal.

Preferably, the sending the access capability information of the user terminal to the first access network device of the first communication system includes:
sending to the first access network device a handover request message which contains the access capability information containing the encryption information of the user terminal.

Preferably, the method further includes: before obtaining and saving encryption information of the user terminal by the communication control device of the second communication system, requesting, by a communication control device of the first communication system, the communication control device of the second communication system to obtain the encryption information of the user terminal.

Preferably, the requesting, by a communication control device of the first communication system, the communication control device of the second communication system to obtain the encryption information of the user terminal includes:
sending, by the communication control device of the first communication system, a classmark request message to the communication control device of the second communication system;
wherein the sending the classmark request message to the user terminal comprises:
forwarding, b y the communication control device of the second communication system, the classmark request message sent by the communication control device of the first communication system to the user terminal.

Preferably, further including: determining whether both the communication control device of the first communication system and the communication control device of the second communication system have capability of sending the classmark request to the user terminal, if yes, the communication control device of the first communication system sending a classmark request message to the communication control device of the second communication system(201),or the communication control device of the second communication system sending a classmark request message to the communication control device of the first communication system(301); if only the communication control device of the first communication system has the capability of sending the classmark request, the communication control device of the first communication system sending a classmark request message to the communication control device of the second communication system(201);
if only the communication control device of the second communication system has the capability of sending the classmark request, the communication control device of the second communication system sending a classmark request message to the communication control device of the first communication system(301)..

Preferably, the first communication system is a 3^{rd} Generation (3G) communication system and the second communication system is a 2^{nd} Generation (2G) communication system; or, the first communication system is a 2G communication system and the second communication system is a 3G communication system.

Preferably, the communication control device of the second communication system is a second Mobile Switching Center (MSC) in 2G communication system or a second Base Station Center (BSC) in 2G communication system.

Preferably, the communication control device of the first communication system is a first MSC, a first MSC Server, or a first Radio Network Controller (RNC) in 3G communication system; and
the first access network device is a first RNC in 3G communication system.

Preferably, the communication control device of the first communication system is a first MSC enhanced MSCe in 2G communication system; and
the first access network device is a first BSC in 2G communication system.

By using the present invention, it is possible for a user terminal to handover successfully between a first communication system and a second communication system repeatedly. Specifically, the present invention has the following advantages.

First, a communication control device, such as the first MSC/MSC Server/RNC/MSCe or the second MSC/BSC in accordance with the present invention, is able to obtain and save the access capability information of the user terminal in the second MSC/BSC after the user terminal handovers successfully from the first communication system to the second communication system. When the user terminal handovers back to the first communication system, the second MSC/BSC sends the access capability information to the first access network device such as the first RNC or the first BSC. In this way, the first access network device may extract the encryption information required from the access capability information, such that the security of communications is guaranteed using the encryption information after the user terminal handovers back to the first communication system, and the user terminal can repeatedly handover between the first communication system and the second communication system successfully. The handover success rate is thereby improved.

Second, the method in accordance with embodiments of the present invention can guarantee the successful handover between two systems effectively, thus the user conversation will not be interrupted by the handover and the user satisfaction is effectively improved. In addition, according to the method in accordance with embodiments of the present invention, the favorable resources of the existing 2G network are fully used at the beginning of building the 3G network to provide users with effective services, the competitiveness of the 3G network is thereby improved.

### Brief Description of the Drawings

Embodiments of the present invention are hereinafter described in detail with reference to the accompanying drawings so as to make the above characteristics and merits thereof more apparent for those skilled in the art:
Figure 1 is a flowchart illustrating a method for handover between systems in accordance with an embodiment of the present invention;
Figure 2 is a flowchart illustrating a method for handover from a 2G communication system to a 3G communication system in accordance with a first embodiment of the present invention;
Figure 3 is a flowchart illustrating a method for handover from a 2G communication system to a 3G communication system in accordance with a second embodiment of the present invention;
Figure 4 is a flowchart illustrating a method for intra-MSC handover from UMTS to GSM in accordance with an embodiment of the present invention;
Figure 5 is a flowchart illustrating a method for inter-MSC handover from UMTS to GSM in accordance with an embodiment of the present invention.

### Detailed Description of the Invention

Embodiments of the present invention are hereinafter described in detail with reference to the accompanying drawings.

According to a method for handover between systems provided in an embodiment of the present invention, after a user terminal handovers from a first communication system to a second communication system, a communication control device of the second communication system obtains the access capability information of the user terminal. When the user terminal is to handover from the second communication system back to the first communication system, the communication control device of the second communication system sends the access capability information of the user terminal to an access network device of the first communication system.

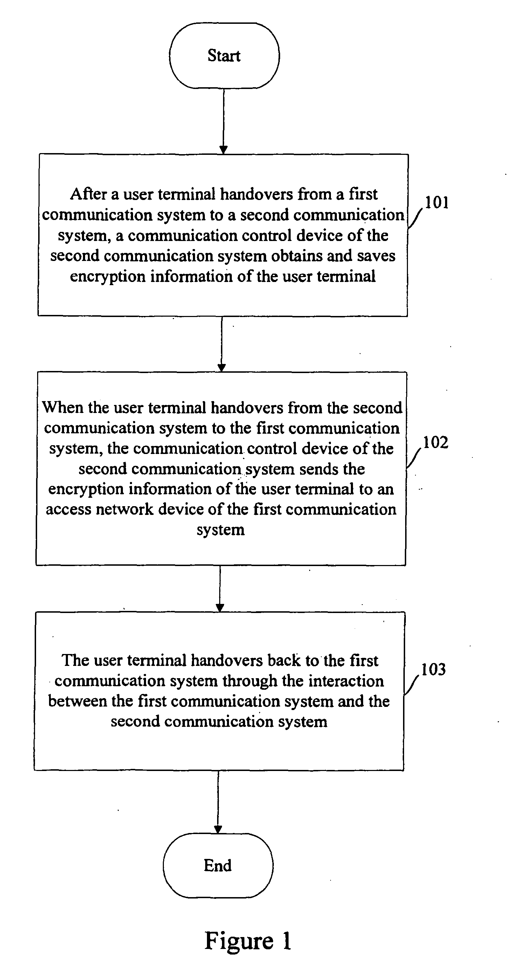

Figure 1 is a flowchart illustrating a method for handover between systems in accordance with an embodiment of the present invention. Referring to Figure 1, the method is described below.

Block 101: after a user terminal handovers from a first communication system to a second communication system, a communication control device of the second communication system obtains and saves the encryption information of the user terminal.

Block 102: when the user terminal is to handover from the second communication system back to the first communication system, the communication control device of the second communication system sends the encryption information of the user terminal to an access network device of the first communication system.

Block 103: the user terminal handovers back to the first communication system through the interaction between the first communication system and the second communication system.

In accordance with the embodiment of the present invention, when the first communication system is a 3G communication system, the second communication system is a 2G communication system; alternatively, when the first communication system is a 2G communication system, the second communication system is a 3G communication system. The communication control device of the second communication system may be the MSC or Base Station Controller (BSC) of the 2G communication system. In addition, the communication control device of the second communication system may unsolicitedly initiate the process of obtaining the encryption information of the user terminal, or may initiate the process of obtaining the encryption information of the user terminal in response to the request of the Mobile Switching Center (MSC)/MSC Server/MSCe of the first communication system or in response to the request of the RNC of the first communication system. Generally, the encryption information of the user terminal is contained in the access capability information of the user terminal. In addition, the access network device may be an RNC or a BSC.

The method for handover between systems is hereinafter described in two embodiments, supposing that the UMTS is a first communication system, and the GSM is a second communication system.

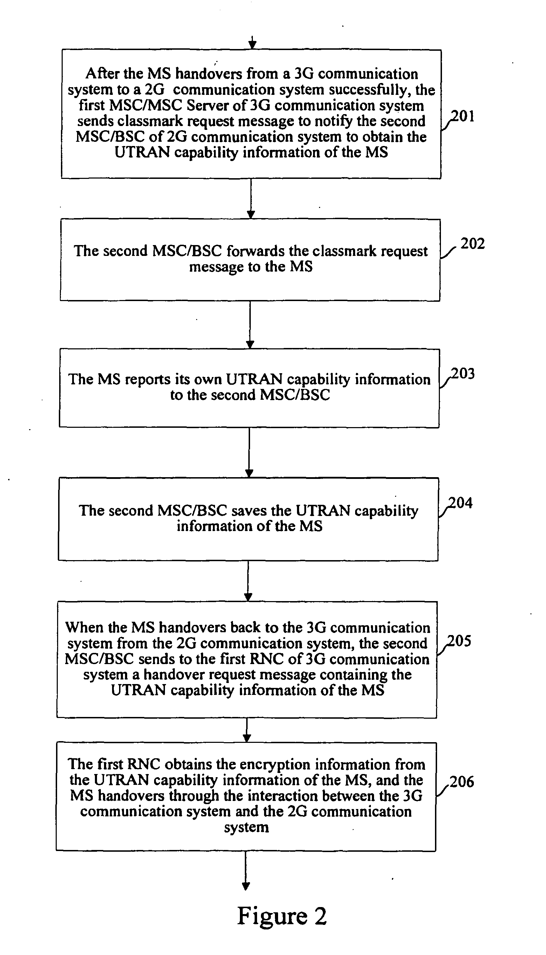

According to a first embodiment of the present invention, the access capability information is the UTRAN capability information, and the second MSC/BSC initiates the obtaining and saving the UTRAN capability information of the MS in response to the request of the first MSC/MSC Server of the 3G communication system. As shown in Figure 2, the method for handover between systems in this embodiment is described below.

Block 201: after the MS handovers from the 3G communication system to the 2G communication system successfully, the first MSC/MSC Server of the 3G communication system sends to the second MSC/BSC of the 2G communication system a classmark request message to notify the second MSCBSC of the 2G communication system to obtain the UTRAN capability information of the MS.

Upon determining that the MS successfully handovers to the 2G communication system, the first MSC/MSC Server of the 3G communication system i.e. the first communication system in this embodiment sends the classmark request message containing an identity of the MS to notify the second MSC/BSC of the 2G communication system to obtain the UTRAN capability information of the MS.

Blocks 202-204: the second MSC/BSC forwards the classmark request message to the MS; the MS sends its own UTRAN capability information to the second MSC/BSC; the second MSC/BSC saves the UTRAN capability information of the MS.

Upon receiving the classmark request message from the network side, the MS obtains and sends its own UTRAN capability information containing the encryption information to the second MSCBSC.

The Blocks 201-204 are performed after the MS handovers successfully from the 3G communication system to the 2G communication system and before the MS handovers from the 2G communication system back to the 3G communication system.

Block 205: when the MS handovers from the 2G communication system back to the 3G communication system, the second MSC/BSC sends to the first RNC in the 3G communication system a handover request message containing the UTRAN capability information, stored in the second MSC/BSC, of the MS.

In Block 205 above, when detecting and determining that the MS will handover from the 2G communication system back to the 3G communication system, the second MSC/BSC searches in the second MSC/BSC itself for the UTRAN capability information of the MS to handover and sends the UTRAN capability information to the first RNC, such that the first RNC can obtain the encryption information of the MS.

Block 206: the first RNC obtains the encryption information from the UTRAN capability information of the MS, and the MS handovers through the interaction between the 3G communication system and the 2G communication system.

In Block 206 above, the first RNC obtains the encryption information of the MS from the UTRAN capability information so as to guarantee that the MS can still communicate in the encryption mode after the MS handovers back to the 3G communication system. And the MS handovers from the 2G communication system back to the 3G communication system through the interaction of the second BSS in the 2G communication system with the first Radio Network Subsystem (RNS) and the first MSC/MSC Server in the 3G communication system.

By far, the handover between systems in this embodiment is performed.

Although the entity sending the classmark request message to the second MSC/BSC in the above process is the first MSC/MSC Server, the entity may also be the first RNC of the 3G communication system in the practical applications.

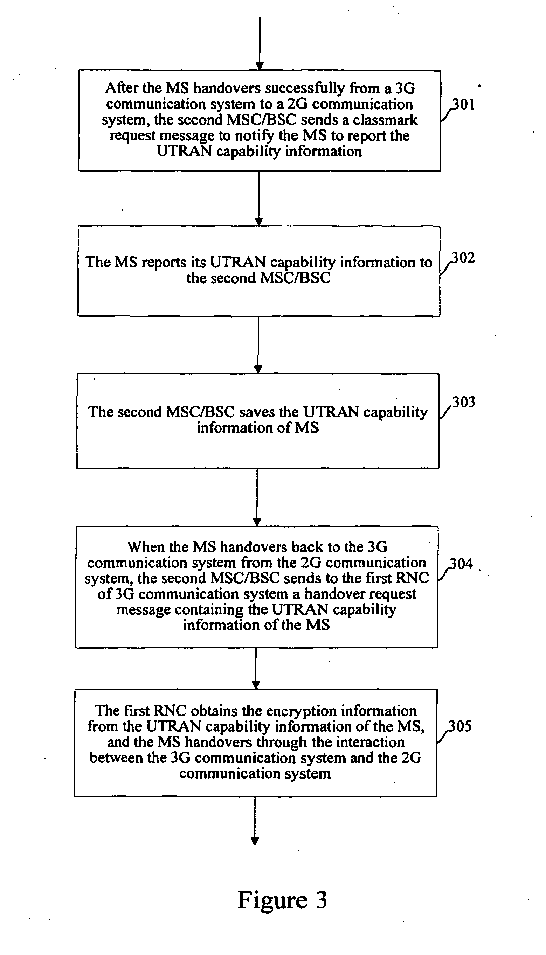

According to a second embodiment of the present invention, the communication control device for obtaining and saving the UTRAN information of the MS is the second MSC/BSC. As shown in Figure 3, the method for handover between systems in this embodiment is described below.

Block 301: after the MS handovers successfully from the 3G communication system to the 2G communication system, the second MSC/BSC sends a classmark request message to notify the MS to report the UTRAN capability information.

Upon detecting that the MS handovers successfully from the 3G communication system to the 2G communication system, the second MSC/BSC directly notifies the MS to report the UTRAN capability information.

Blocks 302∼303: the MS reports its own UTRAN capability information to the second MSC/BSC, and the second MSC/BSC saves the UTRAN capability information of the MS.

Block 304: when the MS handovers from the 2G communication system back to the 3G communication system, the second MSC/BSC sends to the first RNC of the 3G communication system a handover request message containing the UTRAN capability information of the MS.

Block 305: the first RNC obtains the encryption information from the UTRAN capability information of the MS, and the MS handovers through the interaction between the 3G communication system and the 2G communication system.

By far, the handover between systems in this embodiment is performed.

As can be seen from the above, the difference between the second embodiment and the first embodiment is that the initiators for obtaining the UTRAN capability information of the MS are different. In accordance with embodiments of the present invention, whether both the first MSC/MSC Server/RNC and the second MSC/BSC have the capability of sending a classmark request message is determined in advance. If both have the capability, the handover from the 3G communication system to the 2G communication system is implemented according to the method described in either of the two embodiments above. Otherwise, when one of the first MSC/MSC Server/RNC and the second MSC/BSC has the capability of sending a classmark request message, the one having the capability (i.e. the first MSC/MSC Server/RNC or the second MSC/BSC) sends the classmark request message. When the first MSC/MSC Server/RNC sends a classmark request message to the MS, the classmark request message should be forwarded by the second MSC/BSC. In practical applications, the second MSC/BSC is able to determine whether the first MSC/MSC Server/RNC has the capability of sending a classmark request message according to a Service Area Identifier (SAI) of the first MSC/MSC Server/RNC.

In accordance with embodiments of the present invention, the UTRAN capability information of the MS is contained in a first RNC to second RNC transparent information element of a handover request message (i.e. source RNC to target RNC transparent element of a handover request message), and is sent to the first RNC. The first RNC to second RNC transparent information element is set as follows:
REFERENCE: 3.2.2.76;
DIRECTION: MSC-BSS;
TYPE: O(18);
LEN: n-m.

In addition, the premise of the embodiments of the present invention is that the MS handovers successfully from the first communication system to the second communication system. The handover may be intra-MSC handover or inter-MSC handover. Supposing that the UTMS is the first communication system and the GSM is the second communication system, the handover of the MS from the first communication system to the second communication system is hereinafter described.

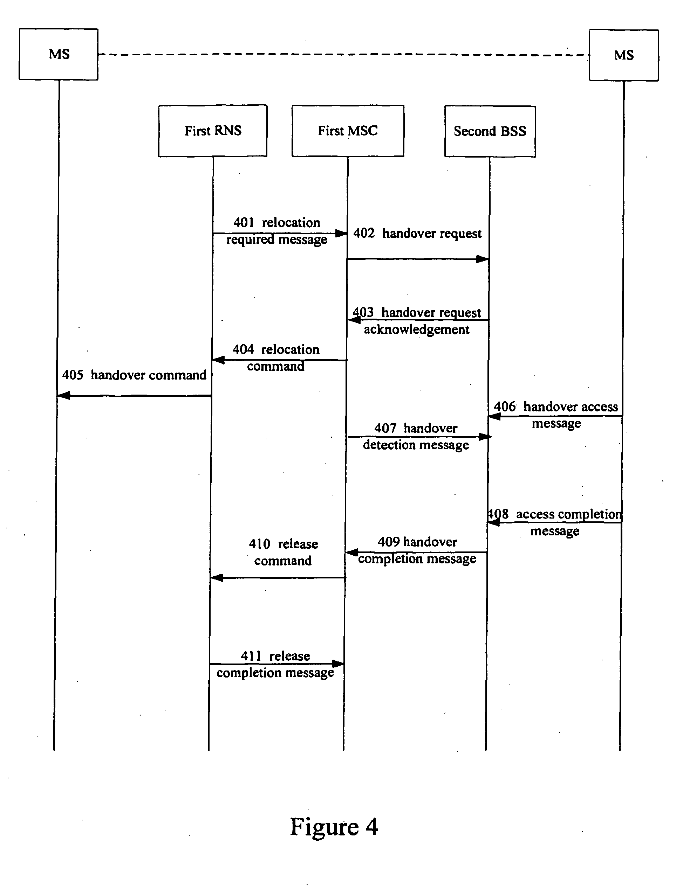

Figure 4 is a signaling flowchart illustrating a method of intra-MSC handover of an MS from UMTS to GSM. As shown in Figure 1, the handover is described below.

Block 401: when the MS has a conversation in the 3G communication system and is to handover, the first RNS reports over the Iu interface a relocation required message to request the first MSC of the 3G communication system to implement the handover.

Block 402: upon receiving the relocation required message reported by the first RNS, the first MSC determines a corresponding second BSS based on the relocation required message, and sends a handover request message to the second BSS to notify the second BSS to prepare radio resources for the MS to handover.

Block 403∼404: the second BSS prepares the radio resources and sends a handover request acknowledgement message to the first MSC; the first MSC determines the encryption algorithm used after the handover, and constructs and sends a relocation command message to the first RNS.

Block 405: the first RNS sends to the MS, over an air interface, a Radio Resource Control-Handover-Command (i.e. RRC-HO-Command) message containing the encryption algorithm information selected by the second BSC to require the MS to access the second BSS from the first RNS.

Blocks 406∼409: the MS reports, over an air interface, a Radio-Interface-Handover-access message (i.e. RI-HO-access message) to the second BSS to indicate that the MS attempts to access the second BSS; the second BSS sends an A-Handover-Detect message to the first MSC to indicate that the access of the MS has been detected. The MS reports, over an air interface, an RI-HO-Complete message to indicate that the MS has successfully accessed the second BSS. The second BSS sends an A-Handover-Complete message to the first MSC to notify the first MSC that the MS requesting the handover handovers successfully.

Blocks 410∼411: the first MSC sends an Iu-Release-Command message to the RNS to notify the first RNS to release the radio resources occupied by the previous conversation. Upon releasing the radio resources, the RNS sends an Iu-Release-Complete message to the first MSC.

By far, the intra-MSC handover from a 3G communication system such as the UMTS to a 2G communication system such as the GSM is completed.

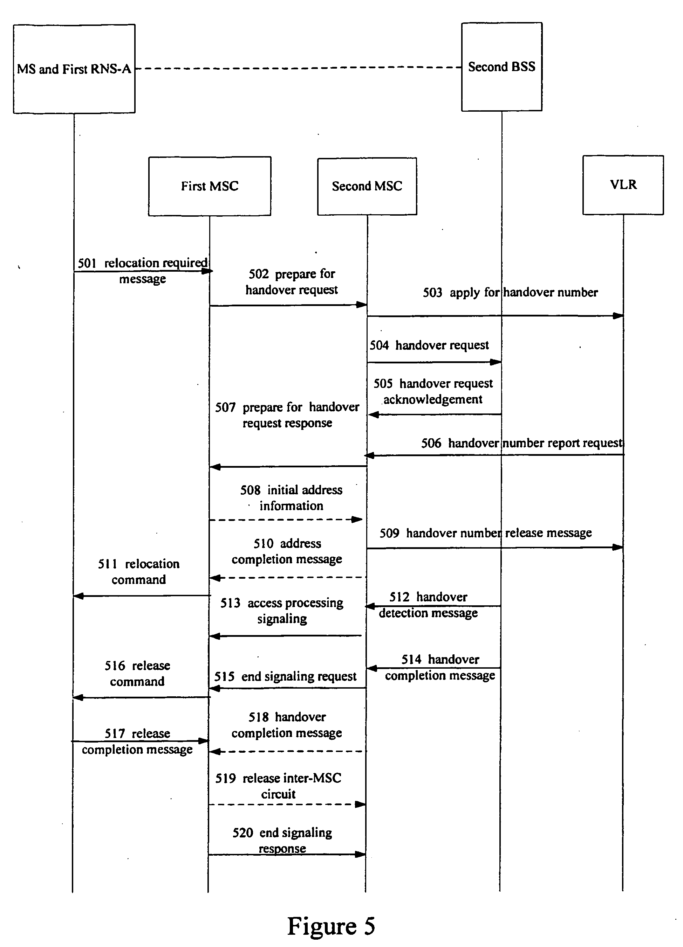

Figure 5 is a flowchart illustrating a method of inter-MSC handover of an MS from UMTS to GSM. As shown in Figure 5, the handover is described below.

Block 501: when an MS has a conversation in a 3G communication system and the MS is to handover, the first RNS reports over an Iu interface a relocation required message to the first MSC of the 3G communication system to request the first MSC to perform the handover.

Block 502: the first MSC determines a corresponding second BSS, and sends a handover request message to the second BSS to notify the second BSS to prepare radio resources for the MS to handover.

Blocks 503~505: upon receiving a MAP-Prep-Handover req. message from the first MSC, the second MSC applies for a handover number from the Visitor Location Register (VLR) so as to establish a circuit between the first MSC and the second MSC, i.e. to prepare for the Initial Address Message (IAM). The second MSC sends a handover request message to the second BSS to notify the second BSS to prepare radio resources for the MS requesting the handover. Upon preparing the radio resources, the second BSS sends a handover request acknowledgement message to the first MSC.

Blocks 506∼507: the VLR sends to the second MSC a MAP-Send-Handover-Number-Report req. message containing the handover number allocated to the second MSC. A ccording to the handover number and the handover request acknowledgement message, the MSC constructs and sends a Map-Prep-Handover resp. message to the first MSC to indicate that the radio resources and the handover number are ready.

Blocks 508~511: the first MSC analyzes the handover number returned by the second MSC and establishes the circuit between the first MSC and the second MSC, and sends the Initial Address Message (IAM) to the MSC. The second MSC sends a handover number release message (MAP-Send-Handover-Number-Report resp. message) to the VLR to notify the VLR to release the handover number such that the handover number can be used when other users request the handover. The MSC sends an address completion message to the first MSC-A to indicate that the circuit between the two MSCs has been established. Moreover, the first MSC determines the encryption algorithm after the handover, and constructs and sends a relocation command message to the first RNS to require the MS to access the second BSS from the first RNS.

Blocks 512∼513: after the MS reports a handover access message over an air interface, the second BSS sends a handover detection message to the second MSC to notify that the access of the MS has been detected. The second MSC forwards, through access process signaling (i.e. MAP-Process-Access-Signal Req.), the handover detection message to the first MSC to indicate that the MS attempts to access the 2G communication system.

Blocks 514∼517: after the MS accesses the 2G communication system, the second BSS sends a handover completion message to the second MSC to notify the second MSC that the MS has successfully accessed the 2G communication system. The second MSC forwards, through a Mobile Application Part (MAP)-Send-End-Signal Req. message, the handover completion message to the first MSC to indicate that the MS has successfully accessed the 2G communication system. Upon receiving the MAP-Send-End-Signal Req. message, the first MSC sends a releasing command to the first RNS to notify the first RNS to release the radio resources occupied by the previous conversation. The first RNS reports a releasing completion message to the first MSC to notify that the radio resources occupied by the previous conversation have been released.

Blocks 518∼520: the MSC notifies the first MSC over a relay interface that the handover is performed through a message such as ANSWER message so as to keep the integrity of relay signaling. When the call is terminated, the first MSC notifies the second MSC that the inter-MSC circuit has been released through a RELEASE message. The first MSC sends an MAP-Send-End-Signal resp. message to notify the second MSC to release the radio resources which were applied for during the handover.

Thus, the inter-MSC handover from the 3G communication system such as the UMTS to the 2G communication system such as the GSM is performed.

During the above handover between the UMTS and the GSM shown in Figure 4 and Figure 5, the first MSC receives a handover request acknowledgement message returned by the second BSS. The handover request acknowledgement message contains a 2G GSM encryption mode selected by the second BSS. The first MSC constructs and sends a relocation command message to the first RNC; the first RNC sends to the MS a handover command message containing the encryption mode selected by the second BSS. In this way, the handover of the MS from the 3G communication system to the 2G communication system can be performed.

Whether the handover of an MS from a first communication system to a second communication system is implemented according to the process shown in Figure 4 or Figure 5, the MS may handover back to the first communication system in accordance with either the method in the first embodiment or the method in the second embodiment above.

In the above technical scheme, the UTMS using the WCDMA technology is taken as the first communication system, however, the above technical scheme is also applicable to other Code Division Multiple Access (CDMA) communication fields. When the handover is implemented between an IS95 channel type and an IS2000 channel type, or between a 2G communication system and a 3G communication system within the CDMA communication field, after an MS handovers successfully from a 3G communication system to a 2G communication system, the first MSC enhanced (MSCe) of the 3G communication system sends a classmark request message to notify the second MSC/BSC of the 2G communication system to obtain the access capability information of the MS. The second MSC/BSC forwards the classmark request message to the MS; the MS reports its access capability information to the second MSC/BSC; the second MSC/BSC saves the access capability information of the MS. When the MS handovers from the 2G communication system back to the 3G communication system, the second MSC/BSC sends to the first BSC of the 3G communication system a handover request message containing the access capability information of the MS. The first BSC obtains the encryption information from the access capability information of the MS, and the handover of the MS is implemented through the interaction between the 3G communication system and the 2G communication system. Practically, the first BSC of the 3G communication system may also send a classmark request message to the second MSC/BSC.

Alternatively, after the MS handovers successfully from a 3G communication system to a 2G communication system, the second MSC/BSC sends a classmark request message to notify the MS to report the access capability information. The MS reports its own access capability information to the second MSC/BSC; the second MSC/BSC saves the access capability information of the MS. When the MS handovers from the 2G communication system back to the 3G communication system, the second MSC/BSC sends to the first BSC of the 3G communication system a handover request message containing the access capability information of the MS. The first BSC obtains the encryption information from the access capability information of the MS, and the handover of the MS is implemented through the interaction between the 3G communication system and the 2G communication system.

As can be seen from the above technical schemes, a communication control device, such as the first MSC/MSC Server/RNC/MSCe or the second MSC/BSC, is able to obtain the access capability information of a user terminal and save the access capability information in the second MSC/BSC after the user terminal handovers successfully from a first communication system to a second communication system. When the user terminal handovers back to the first communication system, the second MSC/BSC sends the access capability information to an access network device such as an RNC or a BSC of the first communication system. In this way, the access network device of the first communication system may extract the required encryption information from the access capability information so as to guarantee the security of communications using the encryption information after the user terminal handovers back to the first communication system. Thus, the user terminal can be repeatedly handover between the first communication system and the second communication system successfully, and the handover success rate is further improved.

In addition, because the method in accordance with embodiments of the present invention is able to guarantee the successful handover between two networks effectively, the user conversation will not be interrupted during the handover, which effectively improves the user satisfaction. Further more, the method in accordance with embodiments of the present invention makes full use of the excellent resource of the existing 2G network to provide users with effective services at the beginning of building a 3G network, and the competitiveness of the 3G network is improved.

The foregoing are only preferred embodiments of the present invention and are not for use in limiting the protection scope thereof. All the modifications, equivalent replacements or improvements in the scope of the principles of the present invention shall be included in the protection scope of the present invention as defined by the appended claims.

## Claims

1. A method for handover between systems, comprising:
in response to a user terminal handovers from a first communication system to a second communication system, obtaining and saving, by a communication control device of the second communication system, encryption information of the user terminal (101) ;
when the user terminal is to handover from the second communication system back to the first communication system, sending, by the communication control device of the second communication system, the encryption information of the user terminal to a first access network device of the first communication system (102) ;
wherein the user terminal handovers back to the first communication system through interaction between the first communication system and the second communication system (103) ;
**characterized by**, the obtaining encryption information of the user terminal comprising:
sending, by the communication control device of the second communication system, a request to the user terminal for the access capability information of the user terminal (202, 301) ;
obtaining, by the communication control device of the second communication system, the access capability information containing the encryption information from the user terminal (203, 302).

2. The method of claim 1, wherein the sending the encryption information of the user terminal to the first access network device of the first communication system comprises:
sending the access capability information containing the encryption information of the user terminal to the first access network device of the first communication system,
wherein the first access network device obtains the encryption information of the user terminal from the access capability information (205).

3. The method of claim 1 or 2, wherein the obtaining and saving the access capability information comprises:
sending, by the communication control device of the second communication system, a classmark request message to the user terminal to notify the user terminal to report the access capability information (202, 301) ;
receiving, by the communication control device of the second communication system, the access capability information containing the encryption information sent by the user terminal (203, 302) ; and
saving, by the communication control device of the second communication system, the access capability information containing the encryption information of the user terminal (204, 303).

4. The method of claim 1or 2, wherein the sending the access capability information of the user terminal to the first access network device of the first communication system comprises:
sending to the first access network device a handover request message which contains the access capability information containing the encryption information of the user terminal (205).

5. The method of claim 3, further comprising:
before obtaining and saving enc ryption information of the user terminal by the communication control device of the second communication system, requesting, by a communication control device of the first communication system, the communication control device of the second communication system to obtain the encryption information of the user terminal (201).

6. The method of claim 5, wherein the requesting, by a communication control device of the first communication system, the communication control device of the second communication system to obtain the encryption information of the user terminal comprises:
sending, by the communication control device of the first communication system, a classmark request message to the communication control device of the second communication system (201) ;
wherein the sending the classmark request message to the user terminal comprises:
forwarding, b y the communication control device of the second communication system, the classmark request message sent by the communication control device of the first communication system to the user terminal (202).

7. The method of claim 3 or 6, further comprising:
determining whether both the communication control device of the first communication system and the communication control device of the second communication system have capability of sending the classmark request to the user terminal, if yes, the communication control device of the first communication system sending a classmark request message to the communication control device of the second communication system(201),or the communication control device of the second communication system sending a classmark request message to the communication control device of the first communication system(301); if only the communication control device of the first communication system has the capability of sending the classmark request, the communication control device of the first communication system sending a classmark request message to the communication control device of the second communication system(201);
if only the communication control device of the second communication system has the capability of sending the classmark request, the communication control device of the second communication system sending a classmark request message to the communication control device of the first communication system(301).

8. The method of claim 1, wherein the first communication system is a 3^{rd} Generation (3G) communication system and the second communication system is a 2^{nd} Generation (2G) communication system; or, the first communication system is a 2G communication system and the second communication system is a 3G communication system.

9. The method of any of claims 1 to 8, wherein the communication control device of the second communication system is a second Mobile Switching Center (MSC) in 2G communication system or a second Base Station Center (BSC) in 2G communication system.

10. The method of any of claims 5 to 8, wherein the communication control device of the first communication system is a first MSC, a first MSC Server, or a first Radio Network Controller (RNC) in 3G communication system; and
the first access network device is a first RNC in 3G communication system.

11. The method of any of claims 5 to 7, wherein the communication control device of the first communication system is a first MSC enhanced MSCe in 2G communication system; and
the first access network device is a first BSC in 2G communication system.

## Patentansprüche

1. Verfahren zum Handover zwischen Systemen, mit den folgenden Schritten:
als Reaktion auf das Handover eines Benutzerendgeräts von einem ersten Kommunikationssystem zu einem zweiten Kommunikationssystem erhält eine Kommunikationssteuereinrichtung des zweiten Kommunikationssystems Verschlüsselungsinformationen des Benutzerendgeräts und speichert diese ab (101);
wenn das Benutzerendgerät ein Handover von dem zweiten Kommunikationssystem zurück zu dem ersten Kommunikationssystem durchführen soll, sendet die Kommunikationssteuereinrichtung des zweiten Kommunikationssystems die Verschlüsselungsinformationen des Benutzerendgeräts zu einer ersten Zugangsnetzeinrichtung des ersten Kommunikationssystems (102);
wobei das Benutzerendgerät durch Interaktion zwischen dem ersten Kommunikationssystem und dem zweiten Kommunikationssystem ein Handover zurück zu dem ersten Kommunikationssystem durchführt (103);
**dadurch gekennzeichnet, dass** das Erhalten von Verschlüsselungsinformationen des Benutzerendgeräts Folgendes umfasst:
die Kommunikationssteuereinrichtung des zweiten Kommunikationssystems sendet eine Anforderung der Zugangsfähigkeitsinformationen des Benutzerendgeräts zu dem Benutzerendgerät (201, 301);
die Kommunikationssteuereinrichtung des zweiten Kommunikationssystems erhält die Zugangsfähigkeitsinformationen, die die Verschlüsselungsinformationen enthalten, von dem Benutzerendgerät (203, 302).

2. Verfahren nach Anspruch 1, wobei das Senden der Verschlüsselungsinformationen des Benutzerendgeräts zu der ersten Zugangsnetzeinrichtung des ersten Kommunikationssystems Folgendes umfasst:
Senden der Zugangsfähigkeitsinformationen, die die Verschlüsselungsinformationen des Benutzerendgeräts enthalten, zu der ersten Zugangsnetzeinrichtung des ersten Kommunikationssystems, wobei die erste Zugangsnetzeinrichtung die Verschlüsselungsinformationen des Benutzerendgeräts aus den Zugangsfähigkeitsinformationen erhält (205).

3. Verfahren nach Anspruch 1 oder 2, wobei das Erhalten und Abspeichern der Zugangsfähigkeitsinformationen Folgendes umfasst:
die Kommunikationssteuereinrichtung des zweiten Kommunikationssystems sendet eine Classmark-Anforderungsnachricht zu dem Benutzerendgerät, um das Benutzerendgerät zu benachrichtigen, die Zugangsfähigkeitsinformationen zu melden (202, 301);
die Kommunikationssteuereinrichtung des zweiten Kommunikationssystems empfängt die Zugangsfähigkeitsinformationen, die die Verschlüsselungsinformationen enthalten, die von dem Benutzerendgerät gesendet wurden (203, 302); und
die Kommunikationssteuereinrichtung des zweiten Kommunikationssystems speichert die Zugangsfähigkeitsinformationen, die die Verschlüsselungsinformationen des Benutzerendgeräts enthalten, ab (204, 303).

4. Verfahren nach Anspruch 1 oder 2, wobei das Senden der Zugangsfähigkeitsinformationen des Benutzerendgeräts zu der ersten Zugangsnetzeinrichtung des ersten Kommunikationssystems Folgendes umfasst:
Senden einer Handover-Anforderungsnachricht, die die Zugangsfähigkeitsinformationen, die die Verschlüsselungsinformationen des Benutzerendgeräts enthalten, enthält, zu der ersten Zugangsnetzeinrichtung (205).

5. Verfahren nach Anspruch 3, ferner mit dem folgenden Schritt:
vor dem Erhalten und Abspeichern der Verschlüsselungsinformationen des Benutzerendgeräts durch die Kommunikationssteuereinrichtung des zweiten Kommunikationssystems fordert eine Kommunikationssteuereinrichtung des ersten Kommunikationssystems an, dass die Kommunikationssteuereinrichtung des zweiten Kommunikationssystems die Verschlüsselungsinformationen des Benutzerendgeräts erhält (201).

6. Verfahren nach Anspruch 5, wobei das Anfordern durch eine Kommunikationssteuereinrichtung des ersten Kommunikationssystems, dass die Kommunikationssteuereinrichtung des zweiten Kommunikationssystems die Verschlüsselungsinformationen des Benutzerendgeräts erhält, Folgendes umfasst:
die Kommunikationssteuereinrichtung des ersten Kommunikationssystems sendet eine Classmark-Anforderungsnachricht zu der Kommunikationssteuereinrichtung des zweiten Kommunikationssystems (201);
wobei das Senden der Classmark-Anforderungsnachricht zu dem Benutzerendgerät Folgendes umfasst:
die Kommunikationssteuereinrichtung des zweiten Kommunikationssystems leitet die durch die Kommunikationssteuereinrichtung des ersten Kommunikationssystems gesendete Classmark-Anforderungsnachricht zu dem Benutzerendgerät weiter (202).

7. Verfahren nach Anspruch 3 oder 6, ferner mit den folgenden Schritten:
Bestimmen, ob sowohl die Kommunikationssteuereinrichtung des ersten Kommunikationssystems als auch die Kommunikationssteuereinrichtung des zweiten Kommunikationssystems die Fähigkeit besitzen, die Classmark-Anforderungsnachricht zu dem Benutzerendgerät zu senden, und wenn ja, sendet die Kommunikationssteuereinrichtung des ersten Kommunikationssystems eine Classmark-Anforderungsnachricht zu der Kommunikationssteuereinrichtung des zweiten Kommunikationssystems (201), oder die Kommunikationssteuereinrichtung des zweiten Kommunikationssystems sendet eine Classmark-Anforderungsnachricht zu der Kommunikationssteuereinrichtung des ersten Kommunikationssystems (301); wenn nur die Kommunikationssteuereinrichtung des ersten Kommunikationssystems die Fähigkeit besitzt, die Classmark-Anforderungsnachricht zu senden, sendet die Kommunikationssteuereinrichtung des ersten Kommunikationssystems eine Classmark-Anforderungsnachricht zu der Kommunikationssteuereinrichtung des zweiten Kommunikationssystems (201);
wenn nur die Kommunikationssteuereinrichtung des zweiten Kommunikationssystems die Fähigkeit besitzt, die Classmark-Anforderungsnachricht zu senden, sendet die Kommunikationssteuereinrichtung des zweiten Kommunikationssystems eine Classmark-Anforderungsnachricht zu der Kommunikationssteuereinrichtung des ersten Kommunikationssystems (301).

8. Verfahren nach Anspruch 1, wobei das erste Kommunikationssystem ein Kommunikationssystem der dritten Generation bzw. 3G ist und das zweite Kommunikationssystem ein Kommunikationssystem der zweiten Generation bzw. 2G ist; oder das erste Kommunikationssystem ein Kommunikationssystem der zweiten Generation bzw. 2G ist und das zweite Kommunikationssystem ein Kommunikationssystem der dritten Generation bzw. 3G ist.

9. Verfahren nach einem der Ansprüche 1 bis 8, wobei die Kommunikationssteuereinrichtung des zweiten Kommunikationssystems eine zweite Mobilvermittlungsstelle bzw. MSC im 2G-Kommunikationssystem oder eine zweite Basisstationsstelle bzw. BSC im 2G-Kommunikationssystem ist.

10. Verfahren nach einem der Ansprüche 5 bis 8, wobei die Kommunikationssteuereinrichtung des ersten Kommunikationssystems eine erste MSC, ein erster MSC-Server oder eine erste Funknetzsteuerung bzw. RNC im 3G-Kommunikationssystem ist; und
die erste Zugangsnetzeinrichtung eine erste RNC im 3G-Kommunikationssystem ist.

11. Verfahren nach einem der Ansprüche 5 bis 7, wobei die Kommunikationssteuereinrichtung des ersten Kommunikationssystems eine erste Erweiterungs-MSC bzw. MSCe im 2G-Kommunikationssystem ist; und
die erste Zugangsnetzeinrichtung eine erste BSC im 2G-Kommunikationssystem ist.

## Revendications

1. Procédé de transfert entre systèmes, comprenant :
en réponse au transfert d'un terminal utilisateur d'un premier système de communication à un second système de communication, l'obtention et la sauvegarde, par un dispositif de contrôle de communication du second système de communication, d'informations de cryptage du terminal utilisateur (101) ;
quand le terminal utilisateur est sur le point d'être retransféré du second système de communication au premier système de communication, l'envoi, par le dispositif de contrôle de communication du second système de communication, des informations de cryptage du terminal utilisateur à un premier dispositif de réseau d'accès du premier système de communication (102) ;
dans lequel le terminal utilisateur est retransféré au premier système de communication par une interaction entre le premier système de communication et le second système de communication (103) ;
**caractérisé par le fait que** l'obtention des informations de cryptage du terminal utilisateur comprend :
l'envoi, par le dispositif de contrôle de communication du second système de communication d'une requête au terminal utilisateur demandant les informations de capabilité d'accès du terminal utilisateur (202, 301) ;
l'obtention, par le dispositif de contrôle de communication du second système de communication, les informations de capabilité d'accès contenant les informations de cryptage depuis le terminal utilisateur (203, 302).

2. Procédé selon la revendication 1, dans lequel l'envoi des informations de cryptage du terminal utilisateur au premier dispositif de réseau d'accès du premier système de communication comprend :
l'envoi des informations de capabilité d'accès contenant les informations de cryptage du terminal utilisateur au premier dispositif de réseau d'accès du premier système de communication , dans lequel le premier dispositif de réseau d'accès obtient les informations de cryptage du terminal utilisateur à partir des informations de capabilité d'accès (205).

3. Procédé selon la revendication 1 ou 2, dans lequel l'obtention et la sauvegarde des informations de capabilité d'accès comprennent :
l'envoi, par le dispositif de contrôle de communication du second système de communication, d'un message de requête de code de classe au terminal utilisateur pour notifier au terminal utilisateur de communiquer les informations de capabilité d'accès (202, 301) ;
la réception, par le dispositif de contrôle de communication du second système de communication, des informations de capabilité d'accès contenant les informations de cryptage envoyées par le terminal utilisateur (203, 302) ; et
la sauvegarde, par le dispositif de contrôle de communication du second système de communication, des informations de capabilité d'accès contenant les informations de cryptage du terminal utilisateur (204, 303).

4. Procédé selon la revendication 1 ou 2, dans lequel l'envoi des informations de capabilité d'accès du terminal utilisateur au premier dispositif de réseau d'accès du premier système de communication comprend :
l'envoi au premier dispositif de réseau d'accès d'un message de requête de transfert qui contient les informations de capabilité d'accès contenant les informations de cryptage du terminal utilisateur (205).

5. Procédé selon la revendication 3, comprenant en outre :
avant l'obtention et la sauvegarde des informations de cryptage du terminal utilisateur par le dispositif de contrôle de communication du second système de communication, une requête, par un dispositif de contrôle de communication du premier système de communication, au dispositif de contrôle de communication du second système de communication afin d'obtenir les informations de cryptage du terminal utilisateur (201).

6. Procédé selon la revendication 5, dans lequel la requête, par un dispositif de contrôle de communication du premier système de communication, au dispositif de contrôle de communication du second système de communication afin d'obtenir les informations de cryptage du terminal utilisateur comprend :
l'envoi, par le dispositif de contrôle de communication du premier système de communication, d'un message de requête de code de classe au dispositif de contrôle de communication du second système de communication (201) ;
dans lequel l'envoi du message de requête de code de classe au terminal utilisateur comprend :
la transmission, par le dispositif de contrôle de communication du second système de communication, du message de requête de code de classe envoyé par le dispositif de contrôle de communication du premier système de communication au terminal utilisateur (202).

7. Procédé selon la revendication 3 ou 6, comprenant en outre :
la détermination si à la fois le dispositif de contrôle de communication du premier système de communication et le dispositif de contrôle de communication du second système de communication ont la capabilité d'envoyer la requête de code de classe au terminal utilisateur, dans l'affirmative, le dispositif de contrôle de communication du premier système de communication envoyant un message de requête de code de classe au dispositif de contrôle de communication du second système de communication (201), ou le dispositif de contrôle de communication du second système de communication envoyant un message de requête de code de classe au dispositif de contrôle de communication du premier système de communication (301) ; si uniquement le dispositif de contrôle de communication du premier système de communication a la capabilité d'envoyer la requête de code de classe, le dispositif de contrôle de communication du premier système de communication envoyant un message de requête de code de classe au dispositif de contrôle de communication du second système de communication (201) ;
si uniquement le dispositif de contrôle de communication du second système de communication a la capabilité d'envoyer la requête de code de classe, le dispositif de contrôle de communication du second système de communication envoyant un message de requête de code de classe au dispositif de contrôle de communication du premier système de communication (301).

8. Procédé selon la revendication 1, dans lequel le premier système de communication est un système de communication de 3^{e} Génération (3G) et le second système de communication est un système de communication de 2^{e} Génération (2G) ; ou le premier système de communication est un système de communication de 2^{e} Génération (2G) et le second système de communication est un système de communication de 3^{e} Génération (3G).

9. Procédé selon l'une quelconque des revendications 1 à 8, dans lequel le dispositif de contrôle de communication du second système de communication est un second Centre de Commutation de Services Mobiles (MSC) dans le système de communication 2G ou un second Centre de Station de Base (BSC) dans un système de communication 2G.

10. Procédé selon l'une quelconque des revendications 5 à 8, dans lequel le dispositif de contrôle de communication du premier système de communication est un premier MSC, un premier Serveur MSC, ou un premier Contrôleur de Réseau Radio (RNC) dans un système de communication 3G ; et
le premier dispositif de réseau d'accès est un premier RNC dans un système de communication 3G.

11. Procédé selon l'une quelconque des revendications 5 à 7, dans lequel le dispositif de contrôle de communication du premier système de communication est un premier MSC rehaussé, MSCe, dans un système de communication 2G ; et
le premier dispositif de réseau d'accès est un premier BSC dans un système de communication 2G.
